# EUROPÄISCHE PATENTSCHRIFT

(11) **EP 3 579 662 B1**
(45) Veröffentlichungstag und Bekanntmachung des Hinweises auf die Patenterteilung: **27.10.2021**
(21) Anmeldenummer: 19178192.1
(22) Anmeldetag: 04.06.2019
(51) Int. Cl.: H05B 6/12

(54) **INDUKTIONSKOCHFELD UND VERFAHREN ZUR MONTAGE EINES INDUKTIONSKOCHFELDS**
INDUCTION HOB AND METHOD FOR MOUNTING SAME
PLAQUE DE CUISSON À INDUCTION ET PROCÉDÉ DE MONTAGE D'UNE PLAQUE DE CUISSON À INDUCTION

(30) Priorität: 08.06.2018 DE 102018209197
(43) Veröffentlichungstag der Anmeldung: 11.12.2019
(73) Patentinhaber: ARPA SASU, 67350 Niedermodern (FR)
(72) Erfinder: Jedele, Stéphane, 67330 Obermodern-Zutzendorf (FR); Loeber, Denis, 67500 Haguenau (FR)
(74) Vertreter: Patentanwälte Ruff, Wilhelm, Beier, Dauster & Partner mbB

(56) Entgegenhaltungen:
- EP-A1- 2 648 477
- EP-A2- 0 629 820
- WO-A1-2012/137481
- JP-A- 2003 151 746
- US-A1- 2016 057 815

## Beschreibung

Die Erfindung betrifft ein Induktionskochfeld sowie ein Verfahren zur Montage eines solchen Induktionskochfelds. Dabei weist das Kochfeld eine Kochfeldplatte zum Aufstellen von Kochgefäßen, mindestens eine Induktionsspule unterhalb der Kochfeldplatte und eine Abdeckung auf, die die mindestens eine Induktionsheizspule von unten übergreift und/oder nach unten abdeckt.

Es ist aus dem Stand der Technik in Form der EP 2475220 A1 bekannt, bei einem vorgenannten Induktionskochfeld an der Unterseite der Kochfeldplatte Rastelemente anzukleben. An diesen Rastelementen werden Abschirmelemente nach Art von Tellern befestigt, die jeweils eine Induktionsheizspule enthalten. Darunter wird dann eine Abdeckeinheit befestigt.

Nachteilig hierbei ist der zusätzliche Aufwand, der durch das Befestigen der Abschirmelemente an den Rastelementen entsteht samt möglichen Positionierungsproblemen.

Aus der EP 0 629 820 A2 ist es bekannt, zum Erhitzen einer Wok-Pfanne in Form einer Kugelkalotte an die Unterseite der entsprechend gewölbten Glaskeramik eine gewölbte Induktionsheizspule anzubringen. Dabei wird die Induktionsheizspule direkt ohne Zwischenlage odgl. an die Unterseite der Kochfeldplatte angeklebt.

Aus der JP 2003-151746 A ist es bekannt, eine Induktionsheizspule in einem Aufnahmeteller anzuordnen. Der Aufnahmeteller wird dabei mittels spezieller Halter unter der Kochfeldplatte gehalten und bildet an dieser eine Kochstelle. Darüber kann ein Kochgefäß zum Erhitzen aufgesetzt werden. Der Aufnahmeteller liegt dabei nicht direkt an der Unterseite der Kochfeldplatte an. Ein Andrücken kann mittels Federn erfolgen.

Aus der US 2016/057815 A1 ist ein weiteres Induktionskochfeld bekannt, bei dem eine Induktionsheizspule eine Baueinheit bildet mit mehreren tellerförmigen Schichten zur elektrischen Isolierung sowie zur thermischen Dämmung. Auch diese Baueinheit der Induktionsheizspule wird mittels einer Grundplatte, auf der sie aufliegt, und einem großflächigen Tragblech, auf dem mehrere Induktionsheizspulen aufliegen, an die Unterseite einer Kochfeldplatte angedrückt.

Aus der WO 2012/137481 A1 geht ein Induktionskochfeld hervor mit einer Kochfeldplatte und darunter angeordneten Induktionsheizspulen. Die Induktionsheizspulen sind dabei in einer Art Aufnahmeschalen oder Aufnahmeteller angeordnet, die auf einem gemeinsamen Tragblech angeordnet sind und von diesem an die Unterseite der Kochfeldplatte angedrückt werden. Dieses Andrücken kann unter Umständen federelastisch erfolgen.

### Aufgabe und Lösung

Der Erfindung liegt die Aufgabe zugrunde, ein eingangs genanntes Induktionskochfeld sowie ein Verfahren zu seiner Montage zu schaffen, mit denen Probleme des Standes der Technik gelöst werden können und es insbesondere möglich ist, ein Induktionskochfeld einfach und variabel auch in großen Stückzahlen effizient, zuverlässig und kostengünstig montieren zu können.

Gelöst wird diese Aufgabe durch ein Induktionskochfeld mit den Merkmalen des Anspruchs 1 sowie durch ein Verfahren zur Montage eines solchen Induktionskochfelds mit den Merkmalen des Anspruchs 12. Vorteilhafte sowie bevorzugte Ausgestaltungen der Erfindung sind Gegenstand der weiteren Ansprüche und werden im Folgenden näher erläutert. Dabei werden manche der Merkmale nur für das Induktionskochfeld oder nur für das Verfahren zu seiner Montage beschrieben. Sie sollen jedoch unabhängig davon sowohl für das Induktionskochfeld als auch für das Verfahren zu seiner Montage selbstständig und unabhängig voneinander gelten können. Der Wortlaut der Ansprüche wird durch ausdrückliche Bezugnahme zum Inhalt der Beschreibung gemacht.

Es ist vorgesehen, dass bei dem vorgenannten Induktionskochfeld die Induktionsheizspulen selbst als Baueinheit direkt an der Unterseite der Kochfeldplatte angeklebt sind. Somit wird hier ein Ankleben bzw. ein Klebevorgang für die Anbringung der Induktionsheizspulen an der Kochfeldplatte bzw. am Induktionskochfeld verwendet.

Durch das erfindungsgemäße Ankleben der Induktionsheizspule selbst direkt an der Unterseite der Kochfeldplatte kann ein besonders einfach durchzuführendes Verfahren geschaffen werden, das mit sehr wenig zusätzlichen Teilen oder Haltemitteln odgl. auskommt. Dadurch ist es zum einen kostengünstig und zum anderen geht eine Montage schnell, um die Induktionsheizspule mittels eines Abstandshalters direkt an die Unterseite der Kochfeldplatte zu kleben. Ein solcher Abstandshalter ist für Induktionsheizspulen zur Kochfeldplatte hin vorgesehen und bildet mit der Induktionsheizspule eine Baueinheit. Die Induktionsheizspule kann zwar nur mit viel Aufwand entfernt werden, um beispielsweise in einem Reparaturfall durch ein Austausch-Set ausgetauscht zu werden. Dies kann aber in Kauf genommen werden, insbesondere deswegen, weil Induktionsheizspulen in der Praxis sehr zuverlässig sind und entsprechend arbeiten und nur sehr selten einen Defekt haben, so dass sie ausgetauscht werden müssen. Die Möglichkeit, die Induktionsheizspule direkt anzukleben, kann ein starker Vorteil sein. Dadurch kann ein direkter Zugang zu verschiedenen Elektronik-Platinen erleichtert werden.

Allgemein entfallen bei der Erfindung aufwändige Positionierungsmittel, um Induktionsheizspulen an jeweils genau vorgegebener Position an einem Induktionskochfeld zu montieren bzw. vorzusehen, wobei bei höherer Anzahl von Varianten für die Anordnung der Induktionsheizspulen der Aufwand für diese unterschiedlichen Positionsmittel stark steigt. Ein Verändern der Position der Induktionsheizspule ist nach dem erfindungsgemäßen Ankleben auch nicht mehr möglich. Ein Ankleben kann auch zumindest teilweise oder weitgehend automatisiert werden, während bisherige Montagevorgänge gerade wegen der Mehrzahl von möglichen Positionen aufwändig und fehleranfällig sind. Für eine Ermittlung einer neuen Konfiguration bzw. einer neuen Positionierung der Induktionsheizspule wird dann nur ein neues Klebeprogramm benötigt, es muss aber keine Bemusterung von neuen Positioniermitteln odgl. mehr erfolgen.

Die Induktionsheizspule ist vorteilhaft als eigenstabile Baueinheit ausgebildet, die vorzugsweise zur Montage mit der Hand oder mit einem Roboter gegriffen werden kann an zwei gegenüberliegenden Bereichen und sich dabei nicht durchbiegt oder nur unwesentlich durchbiegt in einem Mittelbereich. Eine solche Eigenstabilität kann erreicht werden, indem die Induktionsheizspule auf mindestens einer Seite mit einer flächigen Folie verklebt wird, evtl. auch beidseitig. Zusätzlich können noch Ferrite oder vorgenannte Abstandshalter, vorteilhaft in Stabform, angebracht werden, insbesondere angeklebt werden, die auch zur Eigenstabilität beitragen können.

In Ausgestaltung der Erfindung kann vorgesehen sein, die Induktionsheizspulen mindestens an zwei Punkten festzukleben mit einer Oberseite der Induktionsheizspule oder einem Randbereich davon. Des Weiteren ist es möglich, dabei die Induktionsheizspule zuerst an der Unterseite der Kochfeldplatte anzudrücken und dann entlang eines Außenrands an mindestens zwei Punkten entsprechenden Kleber anzubringen bzw. aufzutragen, der dann sowohl an der Unterseite der Kochfeldplatte anhaftet als auch am Außenrand oder Randbereich der Induktionsheizspule. Ein solcher Kleber kann dann eine Art Kehlnaht bilden, wobei sich in diesem Fall kein Kleber direkt zwischen Induktionsheizspule bzw. deren Oberseite und der Unterseite der Kochfeldplatte befindet. So kann ein exakter Abstand zwischen Induktionsheizspule bzw. ihrer Oberseite und der Kochfeldplatte erreicht werden.

Bei der Verklebung mit Kleber direkt zwischen Oberseite der Induktionsheizspule und Unterseite der Kochfeldplatte sind Abstandshalter odgl. vorgesehen, die von der Oberseite der Induktionsheizspule abstehen oder zwischen beiden Teilen angeordnet sind. In einem Zwischenraum entsprechend dem dadurch hergestellten Abstand kann dann der Kleber vorgesehen sein.

Für eine noch festere und bessere Verklebung können mehr als zwei Klebepunkte vorgesehen sein, beispielsweise mindestens vier Punkte, insbesondere gleich verteilte Punkte. Des Weiteren kann auch ein weitgehend flächiges Ankleben vorgenommen werden, beispielsweise durch mehrere Klebeflächen auf der ganzen Länge der Abstandshalter.

In vorteilhafter Ausgestaltung der Erfindung kann eine Induktionsheizspule an ihrer Oberseite, die zur Unterseite der Kochfeldplatte hin weist bzw. daran anliegt, elektrisches Isolationsmaterial und/oder thermisches Dämmmaterial aufweisen. Solches Material kann jeweils bevorzugt in flächiger Schichtform vorliegen und somit zu mindestens 80 %, vorzugsweise im Wesentlichen vollständig, die Oberseite der Induktionsheizspule einnehmen oder bedecken. Dies ist an sich bekannt für Induktionskochfelder, um die Induktionsheizspule gegen zu starkes Erwärmen durch einen aufgesetzten sehr heißen Topf zu schützen.

In weiterer Ausgestaltung der Erfindung kann vorgesehen sein, dass entlang von mindestens zwei gegenüberliegenden Außenbereichen der Kochfeldplatte Befestigungsmittel an ihre Unterseite angeklebt sind. Ein Abstand zu einer seitlichen Außenkante kann weniger als 10 % der Breite der Kochfeldplatte in dieser Richtung betragen. Diese Befestigungsmittel dienen dazu, die vorgenannte Abdeckung daran zu befestigen, vorteilhaft lösbar zu befestigen. Dazu kann sie angeschraubt oder angerastet sein, wobei die Befestigungsmittel entsprechend ausgebildet sind. Hier bietet es sich beispielsweise an, zwei gegenüberliegende Befestigungsschienen vorzusehen. Diese ermöglichen ein Befestigen der Abdeckung an mehreren Punkten.

Die Abdeckung kann die Funktion des Abschirmens der Felder der Induktionsheizspulen übernehen und dazu beispielsweise aus Aluminium oder allgemein aus Metall ausgebildet sein.

In weiterer Ausgestaltung der Erfindung kann an der Abdeckung bzw. zwischen Abdeckung und Kochfeldplatte mindestens ein Bauteilträger, beispielsweise eine Leiterplatte, vorgesehen sein. Der Bauteilträger kann vorteilhaft an der Abdeckung befestigt sein, und zwar an einer von der Kochfeldplatte weg weisenden Seite der Abdeckung bzw. an ihrer Unterseite. Ein Abstand der Abdeckung zu den Induktionsheizspulen kann relativ gering sein, beispielsweise weniger als 2 cm betragen oder sogar weniger als 1 cm. So kann ein flacher Aufbau des gesamten Induktionskochfelds erreicht werden. An dem mindestens einen Bauteilträger können die üblichen bekannten und notwendigen Funktionseinheiten eines Induktionskochfelds vorgesehen sein wie Schaltungsbauteile für Gleichrichter und Umrichter, Steuerungsbauteile, Lüfter und dergleichen. Es kann auch mindestens ein Kühlkörper an dem Bauteilträger bzw. der genannten Leiterplatte vorgesehen sein. Vorteilhaft sind zwei Kühlkörper vorgesehen bzw. vorteilhaft ist pro Bauteilträger mindestens ein Kühlkörper vorgesehen, der auf bekannte Art und Weise für die Kühlung vor allem von Leistungsbauteilen sorgt. Hierfür kann zusätzlich auch mindestens ein Lüfter vorgesehen sein.

Bevorzugt ist noch eine zusätzliche Gehäuseschale vorgesehen, die das Induktionskochfeld nach unten abdeckt und somit auch sowohl die vorgenannte Abdeckung als auch den vorgenannten Bauteilträger. Eine solche Gehäuseschale kann im Wesentlichen ausgebildet sein wie im Stand der Technik und aus Kunststoff bestehen. Sie sollte nicht angeklebt sein, sondern kann beispielsweise auch an den vorgenannten Befestigungsmitteln direkt befestigt werden auf lösbare Art und Weise oder an der Abdeckung oder dem Bauteilträger. So können Reparaturen an den vorgenannten Funktionseinheiten vor allem an einem Bauteilträger vorgenommen werden, vorteilhaft mit einem direkten und schnellen Zugang. Eine solche Gehäuseschale braucht keine tragende Funktion auszuüben, sondern dient im Wesentlichen dem Verschluss und Abschluss des Induktionskochfelds nach unten.

In vorteilhafter weiterer Ausbildung der Erfindung kann vorgesehen sein, dass unterhalb der Induktionsheizspulen ein Bauteilträger angeordnet ist, der sämtliche Induktionsheizspulen überdeckt. Durch einen einzigen derart großen Bauteilträger ist dann genügend Platz gegeben, um sämtliche elektrischen Bauteile wie auch möglicherweise vorgenannte Kühlkörper, Lüfter odgl. daran zu befestigen. Dies erleichtert die Herstellung und vor allem auch die Montage, da ein einziger Bauteilträger schneller montiert ist als mehrere.

Alternativ zu der vorgenannten Ausbildung mit einem einzigen großen Bauteilträger können mindestens zwei Bauteilträger vorgesehen sein, vorzugsweise genau zwei, die in etwa gleich groß sein können und im Wesentlichen spiegelbildlich bzw. spiegelsymmetrisch ausgebildet sind. So kann bevorzugt jeder Bauteilträger für die Versorgung bzw. Ansteuerung der von ihm überdeckten Induktionsheizspulen ausgebildet sein.

Es wird als vorteilhaft bei der Erfindung angesehen, wenn ein vorgenannter Bauteilträger nur an einer von der Kochfeldplatte weg weisenden Seite bestückt ist mit elektrischen Bauteilen, sei es in SMD-Technologie oder in THT-Technologie. Lediglich Leiterbahnen und möglicherweise Brücken oder Durchkontaktierungen können dann auch auf der anderen Seite des Bauteilträgers vorgesehen sein, wodurch erreicht werden kann, dass der Bauteilträger relativ nahe an den Induktionsheizspulen angeordnet sein kann. Dies kann die Bauhöhe eines solchen Induktionskochfelds zusätzlich verringern. Des Weiteren können dann thermische Aspekte oder Probleme besser gelöst werden.

Eine Induktionsheizspule kann vorteilhaft derart aufgebaut sein, dass sie mindestens eine Windungsebene aufweist, in der Windungen der Induktionsheizspule verlaufen, die von Spulendraht oder Spulenlitze gebildet werden. Vorteilhaft wird hier eine übliche Litze verwendet. Oberhalb der obersten Windungsebene hin zur Kochfeldplatte sind Abstandshalter und ggf. eine Wärmedämmschicht vorgesehen. Beides ermöglicht es, dass die Windungsebenen bzw. die Windungen der Induktionsheizspule einen vorgebbaren definierten Abstand zur Unterseite der Kochfeldplatte aufweisen, was aus vorgenannten Gründen von Bedeutung ist. Eine derartige Wärmedämmschicht ist zuvor in Form des thermischen Dämmmaterials beschrieben worden. Die genannten Abstandshalter können separate Bauteile aus Kunststoff odgl. sein, ggf. auch aus thermischem Dämmmaterial.

In Weiterbildung der Erfindung sind bevorzugt unterhalb der untersten Windungsebene und somit weg von der Kochfeldplatte Ferrite angeordnet, besonders bevorzugt in flacher Stabform, wie dies an sich üblich ist. Sie dienen zur Bündelung des magnetischen Felds der Induktionsheizspule für eine bessere Effizienz und zur Abschirmung nach unten. Bei einer besonders bevorzugten Ausgestaltung der Erfindung weist eine Induktionsheizspule eine einzige Windungsebene auf mit Windungen, so dass sie einlagig ausgebildet ist.

Allgemein wird es als vorteilhaft für einen Aufbau einer Induktionsheizspule angesehen, wenn die eine einzige Windungsebene oder jede Windungsebene der Induktionsheizspule mit einer oberen Trennabdeckung hin zur Kochfeldplatte versehen ist. Ebenso sollte sie eine untere Trennabdeckung weg von der Kochfeldplatte aufweisen. Derartige Trennabdeckungen können vorteilhaft von einer an sich üblichen Isolationsfolie gebildet sein, beispielsweise als sogenannte Kapton-Folie. Eine solche Isolationsfolie kann selbstklebend ausgebildet sein, so dass sie einfach an die Windungen angeklebt werden kann. Eine solche Isolationsfolie kann, insbesondere wenn sie mit Windungen der Induktionsheizspule verklebt ist, zur zusätzlichen inneren Stabilität beitragen.

Eine eingangs genannte Schicht aus elektrischem Isolationsmaterial für die Induktionsheizspule kann Glimmer bzw. Mikanit aufweisen oder daraus bestehen. Durch Vorsehen zumindest zur Unterseite der Kochfeldplatte hin kann eine elektrische Isolierung sichergestellt werden, möglicherweise zusätzlich zu einer vorgenannten Isolationsfolie oder alternativ dazu.

In einer möglichen weiteren Ausbildung der Erfindung kann mindestens ein Temperatursensor im Induktionskochfeld vorgesehen sein, der an der Unterseite der Kochfeldplatte direkt angeklebt ist, möglicherweise auch mit einer zwischenliegenden Schicht aus elektrisch isolierendem Material. Somit ist auch dessen Befestigung einfach, schnell und dauerhaft sicher. Der stets gleiche Anbringungsort für den Temperatursensor gewährleistet ein gleichbleibend gutes und genaues Temperatursignal, vor allem durch die Abwesenheit von Luft zwischen Kochfeldplatte und Temperatursensor, da hier Kleber vorgesehen ist. Durch diese Verklebung wird die Erfassung der aktuellen Temperatur viel schneller und reaktiver sein, um in diesem Sinn die Steuerung des Kochfelds also deutlich zu verbessern und zu optimieren. Dabei kann dieser Temperatursensor einer Induktionsheizspule zugeordnet sein, wobei er beispielsweise im Bereich dieser Induktionsheizspule oder sogar innerhalb ihrer Fläche vorgesehen sein kann. Besonders vorteilhaft kann ein Temperatursensor in einem freien Bereich der Induktionsheizspule vorgesehen sein, in dem diese keine Windungen aufweist. Dies ist häufig der Fall bei Induktionsheizspulen auch gemäß dem Stand der Technik, so dass der hier vorhandene Raum gut für die Anbringung des Temperatursensors genutzt werden kann. Ein elektrischer Anschluss an den Temperatursensor kann dann durch diesen Zentralbereich an der Unterseite der Induktionsheizspule herausgeführt sein. So kann vorgesehen sein, dass bei jeder Induktionsheizspule im Zentralbereich ein Temperatursensor vorgesehen ist. Dessen Funktion kann an sich bekannten Temperatursensoren entsprechen, insbesondere als Schutzfunktion für die Kochfeldplatte selbst sowie für diese Induktionsheizspule gegen zu hohe Temperatur.

Ähnlich wie für die vorgenannte Bestückung des Bauteilträgers nur an der von der Kochfeldplatte weg weisenden Seite sind vorteilhaft auch Anschlussklemmen für die Induktionsheizspule derart vorgesehen und angeordnet an dem Bauteilträger bzw. an einer Leiterplatte, dass sie von der Unterseite des Kochfelds her zugänglich sind. Insbesondere sind diese Anschlussklemmen selbst auch an der von der Kochfeldplatte weg weisenden Seite des Bauteilträgers angeordnet. Für Anschlusskabel der Induktionsheizspulen kann dann mindestens eine Durchführöffnung an dem Bauteilträger vorgesehen sein, die so angeordnet ist, dass diese Anschlusskabel hindurchgeführt werden und an den Anschlussklemmen angeschlossen werden können, ohne an die Oberseite des Bauteilträgers gelangen zu müssen bzw. ein Anschluss kann auch dann erst vorgenommen werden, wenn bei der Montage des Induktionskochfelds der Bauteilträger fest montiert ist und die Induktionsheizspulen zumindest teilweise überdeckt. So wird ein vorgenannter Aufbau des Induktionskochfelds zusätzlich erleichtert, bei dem die Reihenfolge der zusammen montierten Teile dem Schichtaufbau des fertigen Kochfelds von oben nach unten entspricht, also von der Kochfeldplatte beginnend bis zu einer vorgenannten Abdeckung oder einer Gehäuseschale. Die genaue Ausgestaltung derartiger Anschlussklemmen zum Schrauben oder zum Klemmen ist aus dem Stand der Technik bekannt.

Die Kochfeldplatte an einerseits aus für Kochfelder üblichem Material bestehen, insbesondere Hartglas oder vor allem Glaskeramik. Dann gelten dieselben Bestimmungen, beispielsweise auch für eine Temperaturüberwachung mit einem vorgenannten Temperatursensor, wie für übliche Kochfelder mit entsprechenden Kochfeldplatten. Andererseits kann die Kochfeldplatte aber auch aus anderen Materialien bestehen, die ausreichend temperaturbeständig sind bzw., im Hinblick auf die Induktionsheizspulen, für die entsprechenden Magnetfelder durchlässigen Materialien. Hierfür bietet sich auch anderes Glas an, ebenso Keramik, Stein odgl. sowie Fasermaterialien oder auch Holzplatten. Dann kann die Kochfeldplatte sozusagen Teil einer größeren Platte sein, die eine Arbeitsplatte in einer Küche bildet. Eine solche Kochfeldplatte als Teil bzw. als integraler Bereich eine Arbeitsplatte kann dann viel größer ausgebildet sein und auch Ablageflächen bzw. Arbeitsflächen aufweisen, die nicht mit Induktionsheizspulen versehen sind bzw. die keinen Heizbereich odgl. aufweisen. An derartige Platten kann ein Ankleben der Induktionsheizspulen selbst genauso erfolgen wie zuvor beschrieben.

Eine Montage des Induktionskochfelds gemäß der Erfindung kann dann derart ablaufen, dass zuerst eine entsprechende Kochfeldplatte bereitgestellt wird. Sie wird mit ihrer Unterseite nach oben platziert, vorteilhaft horizontal, und kann dabei fixiert werden. Ob dies nun eine übliche Kochfeldplatte ist oder eine größere Arbeitsplatte ist, wie zuvor erläutert, spielt keine Rolle.

In einem weiteren Schritt werden entweder mindestens eine Induktionsheizspule gegen die Unterseite der Kochfeldplatte angelegt und dabei auf eingangs beschriebene Art und Weise mit dieser Unterseite verklebt. Jedenfalls kann für diesen weiteren Schritt gesagt werden, dass dabei die Induktionsheizspule durch Verkleben an der Unterseite der Kochfeldplatte dauerhaft und positionstreu befestigt wird.

Des Weiteren umfasst das Verfahren einen vorausgehenden oder einen nachfolgenden Schritt, bei dem entlang von mindestens zwei gegenüberliegenden Außenbereichen der Unterseite der Kochfeldplatte eingangs genannte Befestigungsmittel an dieser Unterseite angeklebt werden. Diese Befestigungsmittel können sich über eine bestimmte oder über eine wesentliche Seitenlänge der Unterseite erstrecken und an mehreren diskreten Punkten vorgesehen sein oder durchgehend als eine Art Befestigungsschiene ausgebildet sein. An dieser Befestigungsschiene kann dann nach dem Schritt des Anbringens der Induktionsheizspulen eine vorgenannte Abdeckung angebracht werden, die die Induktionsheizspulen übergreift bzw. nach unten abdeckt. Vorgenannte Temperatursensoren sollten vor der Abdeckung angebracht werden.

In einem letzten Schritt kann eine vorgenannte Gehäuseschale angebracht werden, beispielsweise auch an den Befestigungsmitteln. Damit ist das Kochfeld verschlossen.

In weiterer Ausgestaltung der Erfindung können der weitere Aufbau bzw. die weitere Montage des Induktionskochfelds in aufbauender Art und Weise erfolgen, also sozusagen schichtweise, und zwar derart, wie es bei einem fertigen und richtig herum angeordneten Induktionskochfeld dem Aufbau von oben nach unten entspricht.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombination bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen enthalten und werden im Folgenden näher erläutert. Dabei zeigen in den Zeichnungen:
- Fig. 1: eine seitliche Schnittdarstellung durch ein Induktionskochfeld in einer ersten Ausgestaltung, das nicht zur Erfindung gehört,
- Fig. 2: einen Schnitt durch eine Vergrößerung des Induktionskochfelds nach Fig. 1 mit dem Aufbau einer Induktionsheizspule und deren Anordnung in einem Aufnahmeteller,
- Fig. 3: eine Draufsicht auf die Anordnung der Fig. 2 von der Kochfeldplatte aus gesehen,
- Fig. 4: eine seitliche Schnittdarstellung durch ein erfindungsgemäßes Induktionskochfeld in einer zweiten Ausgestaltung,
- Fig. 5: eine Rückansicht auf das Induktionskochfeld aus Fig. 1,
- Fig. 6: einen schematischen Teilschnitt durch einen elektrischen Anschluss einer Induktionsheizspule,
- Fig. 7: einen Schnitt durch eine Vergrößerung eines alternativen Induktionskochfelds ähnlich Fig. 1 mit anders ausgebildeter Induktionsheizspule und Anordnung in einem Aufnahmeteller, das nicht zur Erfindung gehört, und
- Fig. 8: einen Schnitt durch eine nochmals anders ausgebildete erfindungsgemäße Induktionsheizspule.

### Detaillierte Beschreibung der Ausführungsbeispiele

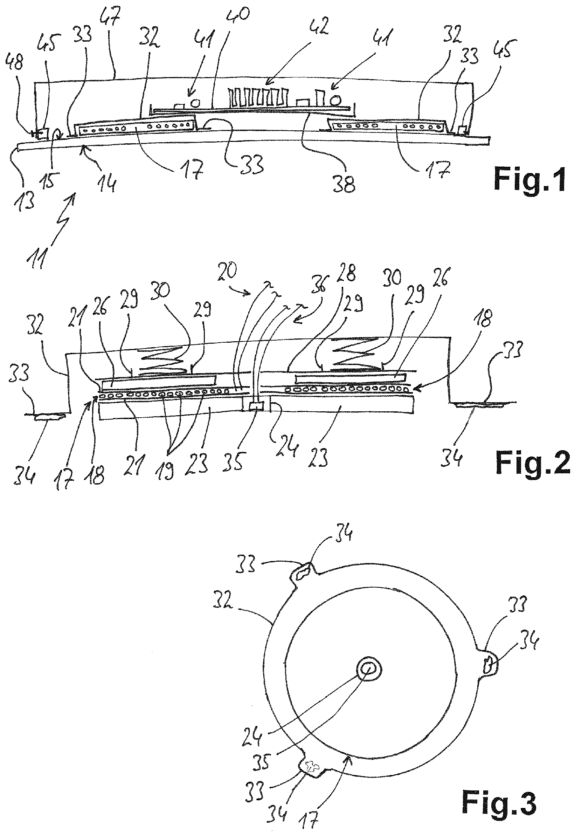

In der Fig. 1 ist ein Induktionskochfeld 11, das nicht zur Erfindung gehört, in seitlicher Schnittdarstellung gezeigt, welches umgekehrt zur Einbauposition angeordnet ist. Eine Kochfeldplatte 13 liegt mit einer Oberseite 14 und einer Unterseite 15 unten, während sie in Gebrauchsposition natürlich oben liegt und vor allem die Oberseite 14 nach oben weist, damit darauf Kochgefäße zum Beheizen aufgestellt werden können. Somit kann die Fig. 1 einen Zustand des Induktionskochfelds 11 und insbesondere dessen Position zeigen, die nach einer erfolgten Montage vorliegen. Die Kochfeldplatte 13 kann in vorteilhafter Ausgestaltung der Erfindung eine Glaskeramikplatte sein mit für Kochfelder üblichen Abmessungen. Alternativ kann die Kochfeldplatte 13 eine zuvor beschriebene größere Arbeitsplatte sein, die beispielsweise eine übliche Tiefe von 55 cm bis 70 cm aufweist und eine Breite von mehreren Metern aufweisen kann. Eine solche Arbeitsplatte kann aus verschiedenem Glas, Stein, Keramik, Holz oder für Arbeitsplatten üblicherweise verwendeten Pressspan bestehen.

An die Unterseite 15 der Kochfeldplatte 13 sind Induktionsheizspulen 17 angelegt oder angedrückt. Sie können identisch ausgebildet sein oder zumindest gleichartig, sich aber in ihrer Größe unterscheiden. Das gesamte Induktionskochfeld 11 kann mindestens die zwei dargestellten Induktionsheizspulen 17 aufweisen, vorteilhaft aber mehr, insbesondere vier oder sechs oder noch mehr. Der genaue Aufbau der Induktionsheizspulen 17 ist aus Fig. 2 ersichtlich, auf welche nachfolgend noch eingegangen wird. Die Induktionsheizspulen 17 sind vorteilhaft als eigenständig handhabbare Baueinheiten ausgebildet und brauchen dann nur noch an dem Induktionskochfeld 11 bzw. der Kochfeldplatte 13 befestigt werden. Sie sind sämtlich auf gleiche Art und Weise montiert bzw. befestigt. Im hier dargestellten Ausführungsbeispiel sind die Induktionsheizspulen 17 nicht selbst direkt angeklebt.

Die Induktionsheizspulen 17 sind jeweils in einem Aufnahmeteller 32 aus dünnem Blech gehalten, der entweder aus Eisenblech oder aus Aluminium besteht. Die Aufnahmeteller 32 weisen seitlich abstehende Laschenabschnitte 33 auf, welche auf eingangs genannte Art und Weise mittels Kleber 34 mit der Unterseite 15 verklebt sind. Durch die feste Verklebung der Aufnahmeteller 32 mit der Kochfeldplatte 13 sind auch die darin enthaltenen Induktionsheizspulen 17 befestigt.

An den Rückseiten der Aufnahmeteller 32, möglicherweise auch entweder direkt mit der Unterseite 15 verklebt oder weiter außen und seitlich befestigt, ist eine Abdeckung 38 vorgesehen. Diese kann aus Kunststoff bestehen, alternativ aus Metall, und möglicherweise einen seitlich etwas nach oben gezogenen Rand aufweisen. An der Abdeckung 38 ist eine Leiterplatte 40 auf nicht näher dargestellte Art und Weise angeordnet, beispielsweise geschraubt, geklemmt oder gerastet. Die Leiterplatte 40 weist die dargestellten Bauteile 41 auf, welche für eine Steuerung des Induktionskochfelds 11 vorgesehen sind sowie auch für eine Leistungsversorgung der Induktionsheizspulen 17. Hier können also Steuerbauteile und Leistungsbauteile auf einer gemeinsamen Leiterplatte 40 angeordnet sein. Alternativ könnten es natürlich auch zwei Leiterplatten sein, wie nachfolgend noch näher erläutert wird. Auf diese mindestens zwei Leiterplatten können entweder die Steuerbauteile einerseits und die Leistungsbauteile andererseits verteilt sein. Alternativ kann für jeweils eine Gruppe von Induktionsheizspulen eine einzige Leiterplatte vorgesehen sein, die dann alle zu deren Betrieb notwendigen Bauteile aufweist. Des Weiteren ist noch ein Kühlkörper 42 an der Leiterplatte 40 vorgesehen, mit dem vor allem Leistungsbauteile, insbesondere Leistungsschalter, gekühlt werden können. Zusätzlich kann auch noch ein Lüfter vorgesehen sein.

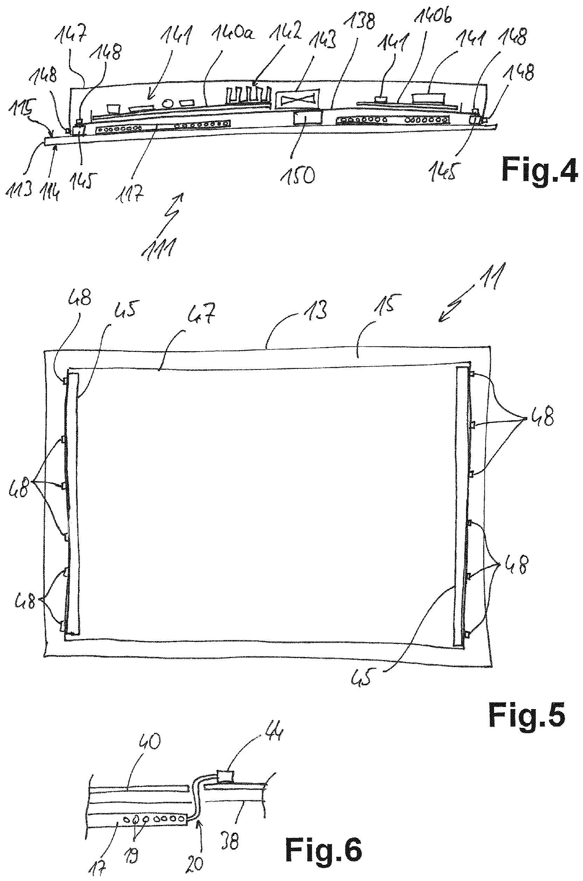

An der Unterseite 15 ist noch ganz links und ganz rechts jeweils eine identische Befestigungsschiene 45 angeklebt, hierzu wird auch auf die Fig. 5 verwiesen mit der Rückansicht. Die Befestigungsschienen 45 verlaufen mit geringem Abstand entlang der seitlichen Außenkanten der Kochfeldplatte 13, beispielsweise 1 cm bis 5 cm oder maximal 10 cm. Sie können aus stabilem Kunststoff oder aus Metall bestehen. Anstelle von langen durchgehenden Befestigungsschienen könnten auch kurze Befestigungsschienen oder mehrere einzelne Befestigungspunkte an der Unterseite 15 angeklebt sein.

Eine übergreifende Gehäuseschale 47, die vorteilhaft aus Kunststoff besteht, ist von hinten an das Induktionskochfeld 11 angesetzt und mittels Schrauben 48 an den Befestigungsschienen 45 angeschraubt. Alternativ zu einer Verschraubung könnte auch ein Anrasten oder Anklemmen mit Ausnehmungen und/oder Vorsprüngen an den Befestigungsschienen 45 für die Gehäuseschale 47 vorgesehen sein. Die Gehäuseschale 47 kann auch die eingangs genannte Abdeckung bilden. Des Weiteren könnte auch die vorgenannte Abdeckung 38 an den Befestigungsschienen 45 befestigt sein anstelle an den Aufnahmetellern 32 oder direkt an der Unterseite 15.

Bis zur erfolgten Montage der Gehäuseschale 47 an den Befestigungsschienen 45 erfolgt der Montagevorgang des Induktionskochfelds 11 vorteilhaft wie in der in Fig. 1 dargestellten Position ersichtlich ist von unten nach oben aufbauend bezogen auf die Arbeitsposition des fertigen Kochfelds. Somit braucht die Kochfeldplatte 13 nicht gedreht bzw. umgedreht zu werden, was den Montagevorgang vereinfacht und schneller macht.

Eine detaillierte Darstellung eines möglichen Aufbaus einer Induktionsheizspule 17 ist in Fig. 2 zu sehen. Wesentlicher Bestandteil der Induktionsheizspulen 17 sind die Spulenwindungen 19, hier aus Spulenlitze bestehend in üblicher konzentrischer Wicklung in einer einzigen Lage 18 als Windungsebene. Von den Windungen 19 geht ein Anschlusskabel 20 nach hinten ab, das vorteilhaft aus derselben und durchgängigen Spulenlitze besteht.

Flächige Isolationsfolie 21 ist von beiden Seiten an die Lage 18 der Windungen 19 geklebt, wie dies an sich üblich ist. Vorteilhaft ist diese Isolationsfolie 21 selbstklebend. Somit wird die Lage 18 bzw. werden die Windungen 19 eigenstabil. Eine Wärmedämmung 23 ist auf einer Oberseite der Induktionsheizspule 17 vorgesehen, die auch ein Abstandshalter sein kann oder als solcher dienen kann. Ebenso kann anstelle einer solchen Wärmedämmung nur ein Abstandshalter vorgesehen sein. Sie kann aus einer Lage faserhaltigen oder faserfreien thermischen Dämmmaterials bestehen mit einer Dicke zwischen 1 mm und 5 mm oder sogar 10 mm. Alternativ zu thermischem Dämmmaterial kann auch eine eingangs genannte Scheibe aus Mikanit bzw. Glimmer verwendet werden mit einer erheblich geringeren Dicke. Neben einer hauptsächlichen elektrischen Isolierung sorgt diese auch für eine gewisse thermische Dämmung. Allgemein kann auch eine Kombination beider Schichten vorgesehen sein für beide Eigenschaften.

An der im Betrieb unteren Seite der Lage 18 sind an sich übliche Ferritstäbe 26 vorgesehen, die in radialer Richtung verlaufen können. Ähnlich wie die Wärmedämmung 23 können sie an die Isolationsfolien 21 angeklebt sein.

Die Wärmedämmung 23 weist eine Ausnehmung 24 auf, welche entsprechend auch in den Isolationsfolien 21 vorgesehen sein sollte. Hier kann ein Temperatursensor 35 angeordnet sein bzw. ein Anschlusskabel 36 davon hindurchgeführt sein. Der Temperatursensor 35 sollte entweder derart an der Wärmedämmung 23 bzw. an der Induktionsheizspule 17 angeordnet sein, dass er bei deren Anbringung automatisch und fest sowie sicher an der Unterseite 15 der Kochfeldplatte 13 anliegt. Alternativ kann er selber direkt an dieser Unterseite 15 angeklebt sein.

Des Weiteren ist noch eine Rückseitenplatte 28 vorgesehen mit Form und Größe entsprechend der Induktionsheizspule 17. Sie ist vorteilhaft auch mit der Induktionsheizspule 17 verbunden, beispielsweise verklebt. Alternativ kann sie tellerartig ausgebildet sein mit einem hier nach unten gezogenen Rand, innerhalb von diesem die Induktionsheizspule 17 bzw. ihre einzelnen Komponenten eingelegt sind, fixiert oder lose. Eine wichtige Funktion der Rückseitenplatte 28 neben einer mechanischen Stabilisierung der Induktionsheizspule 17 als eigenständig handhabbare Baueinheit besteht darin, dass sie mittels zweier Federhalter 29, die nach hinten abstehende Teile sind, Federn 30 sozusagen aufnimmt bzw. diese dadurch ortsgenau anliegen. Diese Federn 30 sind hier als Spiralfedern ausgebildet, es sind aber auch alternative Ausgestaltungen wie federnde Körper aus Silikon odgl. möglich. Sie dienen dazu, die Induktionsheizspule 17 auf eingangs genannte Art und Weise innerhalb eines Aufnahmetellers 32 federnd zu halten bzw. aus diesem Aufnahmeteller 32 federkraftunterstützt herauszudrücken. Anzahl und Ausbildung der Federn 30 kann stark variieren, es kann auch eine einzige zentrale Feder ausreichend sein. Die Federn 30 können auch zusätzlich mit Haltemitteln ähnlich den Federhaltern 29 am Aufnahmeteller 32 bzw. dessen inneren Boden gehalten sein. Die Rückseitenplatte 28 kann im Wesentlichen oder vollständig aus Mikanit bestehen.

Wie auch die Draufsicht aus der Fig. 3 zeigt, weist der Aufnahmeteller 32 drei Laschenabschnitte 33 auf, die sozusagen nach außen abgewinkelt sind. Auf diese Laschenabschnitte 33 kann Kleber 34 aufgebracht sein wie dargestellt, wobei dann die Aufnahmeteller 32 mit den eingelegten Induktionsheizspulen 17 mit der Unterseite 15 der hier nicht dargestellten Kochfeldplatte 13 verklebt werden können. Alternativ können die Laschenabschnitte 33 auch entfallen und der umlaufende Rand des Aufnahmetellers 32 an die Unterseite 15 der Kochfeldplatte 13 direkt angelegt sein. Dann kann von außen als eine Art Kehlnaht Kleber aufgebracht werden zur Verklebung mit der Kochfeldplatte.

Beim Ansetzen und Verkleben des Aufnahmetellers 32 mit der Unterseite 15 der Kochfeldplatte 13 sollte der Temperatursensor 35 bereits ebenfalls mit etwas Kleber versehen sein, falls er festgeklebt wird. So wird er als Bestandteil der Induktionsheizspule 17 auch gleich mitbefestigt bzw. verklebt, allerdings eben noch einmal separat, aber im selben Schritt.

In der Fig. 4 ist eine erfindungsgemäße Ausgestaltung eines Induktionskochfelds 111 dargestellt. Es weist eine an sich gleiche Kochfeldplatte 113 auf mit einer Oberseite 114, die als Kochfeldfläche dient, und einer Unterseite 115. Hier sind die Induktionsheizspulen 117 direkt und ohne Aufnahmeteller entsprechend Fig. 1 an der Unterseite 115 angeklebt. Dies kann vollflächig mit Kleber auf ihrer Oberseite erfolgen, alternativ durch seitlich angebrachten Kleber, wie dies eingangs und auch für die Aufnahmeteller 32 in Fig. 1 erläutert worden ist.

Links und rechts entlang der Außenränder der Kochfeldplatte 113 sind wiederum zwei Befestigungsschienen 145 vorgesehen bzw. angeklebt. Mittels Schrauben 148 ist wiederum eine Gehäuseschale 147 angeschraubt, was allerdings bei der Montage des Induktionskochfelds 111 erst ganz am Ende erfolgt.

An den Befestigungsschienen 145 ist hier eine sehr große Abdeckung 138 befestigt, und zwar ebenfalls mit Schrauben 148 angeschraubt. Diese Abdeckung 138 sollte hier aus Metall bestehen zur Abschirmung der Induktionsheizspulen 117, da die vorgenannten metallischen Aufnahmeteller ja entfallen.

An der Abdeckung 138 ist links eine Leiterplatte 140a befestigt, welche Bauteile 141 aufweist. Des Weiteren weist sie einen Kühlkörper 142 auf, neben dem ein direkt an der Abdeckung 138 befestigter Lüfter 143 vorgesehen ist. Dieser könnte selbstverständlich genauso an der Leiterplatte 140a befestigt sein. In diesem Fall kann die Leiterplatte 140a den Leistungsteil bzw. eine Leistungsansteuerung des Induktionskochfelds 111 aufweisen bzw. bilden, insbesondere die dafür benötigten Leistungsschalter aufweisen, welche dann eben auch gekühlt werden sollten. Die rechte Leiterplatte 140b kann Steuerbauteile aufweisen mit den Bauteilen 141. Sie kann über entsprechend ausgebildete Kühlkanäle ebenfalls etwas gekühlt werden von dem Lüfter 143.

Alternativ zu einer solchen Ausgestaltung der Erfindung mit einer Aufteilung der Funktionen Leistungsregelung einerseits und Steuerung andererseits für die Leiterplatte 140a und 140b könnten auch, wie zu Fig. 1 angesprochen worden ist, zwei gleichartige oder identische, insbesondere spiegelsymmetrisch angeordnete, Leiterplatten vorgesehen sein. Diese weisen jeweils für einen Teil der Induktionsheizspulen 117 sowohl die Steuerbauteile als auch die Leistungsbauteile auf.

Zwischen Abdeckung 138 und Unterseite 115 der Kochfeldplatte 113 ist hier eine schematisch dargestellte Bedieneinrichtung 150 vorgesehen. Sie kann entweder an der Unterseite 115 angeklebt sein, alternativ kann sie auf der von den Leiterplatten 140 abgewandten Seite der Abdeckung 138 befestigt sein, entweder angeschraubt oder angeklebt. Die Bedieneinrichtung 150 weist Leuchtanzeigen und kapazitive Bedienelemente auf, welche durch die lichtdurchlässige Kochfeldplatte 113 hindurch auf bekannte Art und Weise sichtbar sind bzw. wirken.

Mit einer solchen großflächigen Abdeckung 138 entsprechend Fig. 4 wird ein Teil verwendet, welches viele Funktionen erfüllt und an dem weitere Komponenten des Induktionskochfelds 111 gehalten sind. Besteht die Abdeckung 138 aus Metall, so ist vorteilhaft eine flächige Isolierung gegenüber den Leiterplatten 140a und 140b vorgesehen. Möglicherweise kann die Abdeckung 138 dann auch eine gewisse Kühlwirkung oder Kühlfunktion haben.

Durch die Schrauben 148 an den Befestigungsschienen 145 kann neben der Gehäuseschale 147 auch diese Abdeckung 138 entfernt werden, beispielsweise für eine Reparatur von daran enthaltenen Funktionsbauteilen. Lediglich die Induktionsheizspulen 117 sind dann mit der Unterseite 115 verklebt, welche aber üblicherweise eben nicht repariert werden müssen.

In der Fig. 6 ist schematisch dargestellt, wie von einer Induktionsheizspule 17 deren Anschlusskabel 20 durch die Ebene der Abdeckung 38 an einer entsprechenden Öffnung und durch Öffnungen an der Leiterplatte 40 an eine Anschlussklemme 44 angeschlossen werden können. Die Anschlussklemme 44 ist sozusagen von der Rückseite der Leiterplatte 40 her zugänglich. Vor dem Befestigen der Leiterplatte 40 am Induktionskochfeld 11 wird das Anschlusskabel 20 durch die entsprechenden Öffnungen in der Abdeckung 38 und in der Leiterplatte 40 geführt. Nach dem Befestigen der Leiterplatte 40 wird dann der elektrische Anschluss an den Anschlussklemmen 44 durchgeführt.

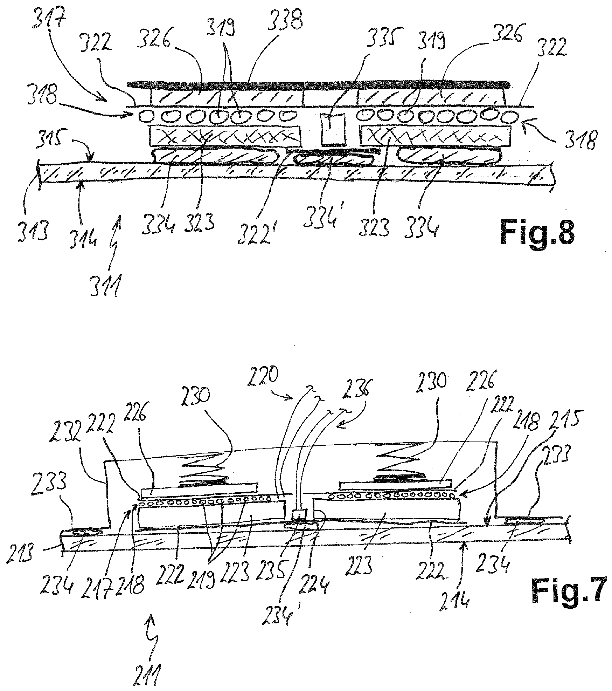

In der Fig. 7 ist in Abwandlung der Darstellung aus Fig. 2 gezeigt, wie bei einem weiteren Induktionskochfeld 211, das nicht zur Erfindung gehört, mit einer Kochfeldplatte 213 samt Oberseite 214 und Unterseite 215 eine weitere Induktionsheizspule 217 etwas anders aufgebaut ist. Die Induktionsheizspule 217 weist eine einzige Lage 218 aus Windungen 219 auf, wie zur Fig. 2 beschrieben. Ein Anschlusskabel 220 geht von diesen ab. In der Fig. 7 oben auf der Lage 218 ist eine obere Mikanitscheibe 222 vorgesehen, vorteilhaft verklebt mit den Windungen 219. Auf der anderen Seite ist die Lage 218 mit Abstandshaltern 223 verklebt. Diese wiederum sind zur Kochfeldplatte 213 hin mit einer weiteren Mikanitscheibe 222 verklebt. Mittig weist die Induktionsheizspule 217 einen Temperatursensor 235 auf, der an die untere Mikanitscheibe 222 angeklebt ist und dessen Anschlusskabel 236 weggeführt sind.

Auf der oberen Mikanitscheibe 222 sind wie zuvor beschrieben übliche Ferritstäbe 226 vorgesehen, vorteilhaft angeklebt. An diese drücken schraubenartige Federn 230 an, die in einem Aufnahmeteller 232 aus Blech gelagert sind, vorteilhaft so wie zur Fig. 2 beschrieben. Somit ist die Induktionsheizspule 217 auch hier federnd in dem Aufnahmeteller 232 gehalten und wird gegen die Unterseite 215 der Kochfeldplatte 213 gedrückt.

Entsprechend Fig. 2 ist der Aufnahmeteller 232 an den Laschenabschnitten 233 mittels Kleber 234, vorteilhaft Silikonkleber, mit der Unterseite 215 der Kochfeldplatte 213 verklebt. Auch die Mikanitscheibe 222, an der der Temperatursensor 235 anliegt bzw. angeklebt ist, ist mittig mit Kleber 234' an die Unterseite 215 angeklebt. Somit ist auch hier eigentlich die gesamte Induktionsheizspule 217 angeklebt oder zumindest fixiert, so dass sie sich nicht mehr seitlich verschieben kann. Gleichzeitig sorgen die Federn 230 für eine konstante Andrückung.

In der Fig. 8 ist eine nochmals weitere Variante dargestellt mit einem Induktionskochfeld 311 gemäß der Erfindung mit einer Induktionsheizspule 317, bestehend aus einer Lage 318 von Windungen 319, einer oberen Mikanitscheibe 322, an der Ferritstäbe 326 festgeklebt sind, Abstandshaltern 323 und einer kleinen zentralen Mikanitscheibe 322', die an einem Temperatursensor 335 angeklebt ist. Das Ankleben an die Unterseite 315 der Kochfeldplatte 313 erfolgt mittels Silikonkleber 334 auf den Abstandshaltern 323, die zusätzlich die Funktion eine Wärmedämmung erfüllen können. Der Kleber 334 kann so großflächig aufgebracht sein wie hier dargestellt, alternativ können es auch mehrere einzelne Klebepunkte sein. Ebenso ist eben die mittlere kleine Mikanitscheibe 322' mittels Silikonkleber 334' festgeklebt. Da sie gleichzeitig an die Abstandshalter 323 anliegt, kann sie hier auch festgeklebt sein und somit den integralen Zusammenhalt der Induktionsheizspule 317 weiter verbessern.

Oben auf der Induktionsheizspule 317 bzw. den Ferritstäben 326 liegt eine Abdeckung 338 auf, welche der Abdeckung 138 des Induktionskochfelds 111 aus Fig. 4 entspricht. Somit ist diese Abdeckung 338 auch, insbesondere wenn sie aus Aluminiumblech odgl. besteht ähnlich wie der Aufnahmeteller 232 der Fig. 7, dazu geeignet, magnetische Felder der Induktionsheizspule 317 abzuschirmen. Somit können dahinter bzw. im Einbauzustand des Induktionskochfelds 311 darunter Elektronikbauteile odgl. angeordnet werden, wie dies die Fig. 1 und 4 zeigen. Diese Abdeckung 338 kann nur etwas größer sein als die Induktionsheizspule 317 selbst. Alternativ kann sie auch Teil einer deutlich größeren Abdeckung sein, wie dies beispielsweise in der Fig. 4 dargestellt ist.

Bei dem Ausführungsbeispiel der Fig. 8 ist, ähnlich wie bei Fig. 7, zum Innenraum des Induktionskochfelds eine große überdeckende Mikanitscheibe 322 vorgesehen. Zur Kochfeldplatte 313 selbst ist bei der Fig. 8 nur die mittlere kleine Mikanitscheibe 322' vorgesehen. Sie weist vor allem den großen Vorteil auf, dass sie den Temperatursensor 335 zur Kochfeldplatte 313 hin noch einmal elektrisch isoliert, da diese bei höheren Temperaturen eine ansteigende elektrische Leitfähigkeit aufweist.

## Patentansprüche

1. Induktionskochfeld (111, 311) mit:
- einer Kochfeldplatte (113, 313) mit einer Oberseite (114, 314) und mit einer Unterseite (115, 315),
- mindestens einer Induktionsheizspule (117, 317) unterhalb der Kochfeldplatte (113, 313),
- einer Abdeckung (138, 338) unterhalb der Kochfeldplatte (113, 313), wobei die Abdeckung die Induktionsheizspule (117, 317) nach unten abdeckt,
**dadurch gekennzeichnet, dass**
ein Abstandshalter (323) eine Baueinheit mit der Induktionsheizspule (117, 317) bildet und die Induktionsheizspule selbst mittels des Abstandshalters (323) direkt an die Unterseite (115, 315) der Kochfeldplatte (113, 313) geklebt ist.

2. Induktionskochfeld nach Anspruch 1, **dadurch gekennzeichnet, dass** entlang von mindestens zwei gegenüberliegenden Außenbereichen der Kochfeldplatte (113), vorzugsweise mit einem Abstand zu einer seitlichen Außenkante von weniger als 10% der Breite der Kochfeldplatte in dieser Richtung, an der Unterseite (115) der Kochfeldplatte Befestigungsmittel (145) an diese Unterseite angeklebt sind, wobei die Abdeckung (138) an diesen Befestigungsmittel (145) lösbar befestigt ist, insbesondere angeschraubt ist und/oder angerastet ist.

3. Induktionskochfeld nach Anspruch 2, **dadurch gekennzeichnet, dass** an der Abdeckung (138) mindestens ein Bauteilträger (140) vorgesehen ist, der insbesondere an der Abdeckung (138) befestigt ist an einer von der Kochfeldplatte (113) weg weisenden Seite, wobei vorzugsweise mindestens ein Kühlkörper (142) an dem Bauteilträger vorgesehen ist, wobei insbesondere zwei Kühlkörper vorgesehen sind oder pro Bauteilträger mindestens ein Kühlkörper vorgesehen ist.

4. Induktionskochfeld nach Anspruch 3, **dadurch gekennzeichnet, dass** eine Gehäuseschale (147) das Induktionskochfeld (111, 311) nach unten abdeckt und damit auch die Abdeckung (138, 338) und den Bauteilträger (140).

5. Induktionskochfeld nach Anspruch 3 oder 4, **dadurch gekennzeichnet, dass** direkt unterhalb der mindestens einen Induktionsheizspule (117, 317) ein Bauteilträger (140) angeordnet ist, der sämtliche Induktionsheizspulen des Induktionskochfelds (111, 311) überdeckt.

6. Induktionskochfeld nach einem der Ansprüche 3 bis 5, **dadurch gekennzeichnet, dass** ein Bauteilträger (140) nur an einer von der Kochfeldplatte (113, 313) weg weisenden Seite bestückt ist.

7. Induktionskochfeld nach einem der Ansprüche 3 bis 6, **dadurch gekennzeichnet, dass** Anschlussklemmen (44) für die Induktionsheizspule (117, 317) an dem Bauteilträger (40, 140) von der Unterseite (115, 315) des Kochfelds (111, 311) her zugänglich vorgesehen sind, vorzugsweise mit Durchführöffnungen an dem Bauteilträger für Anschlusskabel (20) der Induktionsheizspule derart, dass die Anschlusskabel (20) an die Anschlussklemmen (44) von der Unterseite (115, 315) des Induktionskochfelds (111, 311) her anschließbar sind.

8. Induktionskochfeld nach einem der vorhergehenden Ansprüche, **dadurch gekennzeichnet, dass** die Induktionsheizspule (117, 317) an ihrer Oberseite zur Unterseite der Kochfeldplatte (113, 313) hin elektrisches Isolationsmaterial (323) und/oder thermisches Dämmmaterial (23) aufweist, vorzugsweise in flächiger Schichtform, das insbesondere die wesentliche Fläche der Induktionsheizspule zur Kochfeldplatte hin bedeckt.

9. Induktionskochfeld nach einem der vorhergehenden Ansprüche, **dadurch gekennzeichnet, dass** eine Induktionsheizspule (117, 317) mindestens eine Windungsebene aufweist, in der Windungen (19) der Induktionsheizspule aus Spulendraht verlaufen, wobei oberhalb einer obersten Windungsebene hin zur Kochfeldplatte (113, 313) der Abstandshalter (323) und/oder eine Wärmedämmschicht (23) vorgesehen sind und/oder unterhalb einer untersten Windungsebene weg von der Kochfeldplatte Ferrite (26, 326) angeordnet sind.

10. Induktionskochfeld nach Anspruch 9, **dadurch gekennzeichnet, dass** die eine oder jede Windungsebene mit einer oberen Trennabdeckung hin zur Kochfeldplatte (113, 313) versehen ist und mit einer unteren Trennabdeckung (322) weg von der Kochfeldplatte versehen ist, wobei vorzugsweise eine Trennabdeckung von einer Isolationsfolie, insbesondere als selbstklebende Folie zum Ankleben an die Windungen, gebildet ist.

11. Induktionskochfeld nach einem der vorhergehenden Ansprüche, **gekennzeichnet durch** einen Temperatursensor (35, 335), der direkt an der Unterseite (115, 315) der Kochfeldplatte (113, 313) angeklebt ist, wobei vorzugsweise der Temperatursensor einer Induktionsheizspule (117, 317) zugeordnet ist und wobei insbesondere der Temperatursensor in einem freien Zentralbereich der Induktionsheizspule, in dem diese keine Windungen (19) aus Spulendraht aufweist, angeordnet ist.

12. Verfahren zur Montage eines Induktionskochfelds (111, 311) nach einem der vorhergehenden Ansprüche, **gekennzeichnet durch** die Schritte:
- eine Kochfeldplatte (113, 313) mit einer Oberseite (114, 314) und mit einer Unterseite (115, 315) wird bereitgestellt und mit der Unterseite nach oben platziert,
- mindestens eine Induktionsheizspule (113, 313) wird mit dem Abstandshalter (323) gegen die Unterseite (115, 315) der Kochfeldplatte (113, 313) angelegt und dabei mit dieser Unterseite verklebt.

13. Verfahren nach Anspruch 12, **gekennzeichnet durch** die weiteren Schritte:
- in einem vorausgehenden oder in einem nachfolgenden Schritt werden entlang von mindestens zwei gegenüberliegenden Außenbereichen der Unterseite (115, 315) der Kochfeldplatte (113, 313) Befestigungsmittel (145) an diese Unterseite angeklebt,
- eine Abdeckung (138), die die mindestens eine Induktionsheizspule (113, 313) von unten übergreift und/oder nach unten abdeckt, wird an den Befestigungsmitteln (145) befestigt.

## Claims

1. Induction cooking hob (111, 311) having:
- a cooking hob plate (113, 313) with a top side (114, 314) and with a bottom side (115,315),
- at least one induction heating coil (117, 317) underneath the cooking hob plate (113, 313),
- a cover (138, 338) underneath the cooking hob plate (113, 313), wherein the cover covers the induction heating coil (117, 317) towards the bottom,
**characterized in that**
a spacer (323) is a physical unit with the induction heating coil (117, 317) and the induction heating coil itself is adhesively bonded directly to the bottom side (115, 315) of the cooking hob plate (113, 313) by means of the spacer (323).

2. Induction cooking hob according to claim 1, **characterized in that** along at least two opposite outer regions of the cooking hob plate (113), preferably with a distance to a lateral outer edge of less than 10% of the width of the cooking hob plate in this direction, on the bottom side (115) of the cooking hob plate fastening means (145) are adhesively bonded to said bottom side, wherein the cover (138) is releasably fastened to said fastening means (145), in particular is screwed on and/or latched on.

3. Induction cooking hob according to claim 2, **characterized in that** on the cover (138) at least one component carrier (140) is provided, which carrier is in particular fixed to the cover (138) on a side facing away from the cooking hob plate (113), wherein preferably at least one heat sink (142) is provided on the component carrier, wherein in particular two heat sinks are provided or at least one heat sink per component carrier is provided.

4. Induction cooking hob according to claim 3, **characterized in that** a housing shell (147) covers the induction cooking hob (111, 311) towards the bottom, and thereby also the cover (138, 338) and the component carrier (140).

5. Induction cooking hob according to claim 3 or 4, **characterized in that** directly below the at least one induction heating coil (117, 317) a component carrier (140) is disposed, which carrier covers all of the induction heating coils of the induction cooking hob (111, 311).

6. Induction cooking hob according to any of claims 3 to 5, **characterized in that** a component carrier (140) is fitted only on a side facing away from the cooking hob plate (113, 313).

7. Induction cooking hob according to any of claims 3 to 6, **characterized in that** connecting terminals (44) for the induction heating coil (117, 317) are provided on the component carrier (40, 140) and accessible from the bottom side (115, 315) of the cooking hob (111, 311), preferably with feed-through apertures on the component carrier for connecting cables (20) of the induction heating coil such that the connecting cables (20) can be connected to the connecting terminals (44) from the bottom side (115, 315) of the induction cooking hob (111, 311).

8. Induction cooking hob according to any of the preceding claims, **characterized in that** the induction heating coil (117, 317) has on the top side thereof towards the bottom side of the cooking hob plate (113, 313) electrical insulating material (323) and/or thermal insulating material (23), preferably in a planar layer structure, which material covers in particular the essential surface of the induction heating coil towards the cooking hob plate.

9. Induction cooking hob according to any of the preceding claims, **characterized in that** an induction heating coil (117, 317) includes at least one winding plane in which windings (19) of the induction heating coil made of coil wire extend, wherein above a topmost winding plane towards the cooking hob plate (113, 313) the spacer (323) and/or a thermal insulation layer (23) are provided and/or below a bottommost winding plane away from the cooking hob plate ferrites (26, 326) are disposed.

10. Induction cooking hob according to claim 9, **characterized in that** the one or each winding plane is provided with an upper partitioning cover towards the cooking hob plate (113, 313) and is provided with a lower partitioning cover (322) away from the cooking hob plate, wherein preferably a partitioning cover is an insulation film, in particular a self-adhesive film for adhesive bonding to the windings.

11. Induction cooking hob according to any of the preceding claims, **characterized by** a temperature sensor (35, 335) which is adhesively bonded directly to the bottom side (115, 315) of the cooking hob plate (113, 313), wherein preferably the temperature sensor is associated with an induction heating coil (117, 317), and wherein in particular the temperature sensor is disposed in a free central region of the induction heating coil, in which region no windings (19) made of coil wire are located.

12. Method for mounting an induction cooking hob (111, 311) according to any of the preceding claims, **characterized by** the steps:
- providing a cooking hob plate (113, 313) with a top side (114, 314) and with a bottom side (115, 315) and placing said plate with the bottom side facing the top,
- attaching at least one induction heating coil (117, 317) with the spacer (323) against the bottom side (115, 315) of the cooking hob plate (113, 313) and adhesively bonding to said bottom side.

13. Method according to claim 12, **characterized by** the further steps:
- in a preceding or in a subsequent step, along at least two opposite outer regions of the bottom side (115, 315) of the cooking hob plate (113, 313), adhesively bonding fastening means (145) to said bottom side,
- fastening a cover (138) which engages over the at least one induction heating coil (117, 317) from below and/or covers it towards the bottom, to the fastening means (145).

## Revendications

1. Table de cuisson à induction (111, 311) comprenant :
- une plaque de table de cuisson (113, 313) avec une face supérieure (114, 314) et avec une face inférieure (115, 315),
- au moins une bobine de chauffage à induction (117, 317) en dessous de la plaque de table de cuisson (113, 313),
- un recouvrement (138, 338) en dessous de la plaque de table de cuisson (113, 313), le recouvrement recouvrant la bobine de chauffage à induction (117, 317) vers le bas,
**caractérisée en ce**
**qu'**un écarteur (323) forme une unité physique avec la bobine de chauffage à induction (117, 317) et la bobine de chauffage à induction même est collée directement à la face inférieure (115, 315) de la plaque de table de cuisson (113, 313) par le biais de l'écarteur (323).

2. Table de cuisson à induction selon la revendication 1, **caractérisée en ce que** le long d'au moins deux zones extérieures opposées de la plaque de table de cuisson (113), de préférence à une distance d'un bord extérieur latéral de moins de 10 % de la largeur de la plaque de table de cuisson dans cette direction, sur la face inférieure (115) de la plaque de table de cuisson des moyens de fixation (145) sont collés sur cette face inférieure, le recouvrement (138) étant attaché de façon détachable, en particulier vissé et/ou encliqueté sur ces moyens de fixation (145).

3. Table de cuisson à induction selon la revendication 2, **caractérisée en ce que** sur le recouvrement (138) au moins un support de composants (140) est prévu, en particulier ledit support est fixé au recouvrement (138) sur un côté détourné de la plaque de table de cuisson (113), dans laquelle de préférence au moins un dissipateur thermique (142) est prévu sur le support de composants, dans laquelle en particulier deux dissipateurs thermiques sont prévus ou au moins un dissipateur thermique est prévu per support de composants.

4. Table de cuisson à induction selon la revendication 3, **caractérisée en ce qu'**une coquille de boîtier (147) recouvre la table de cuisson à induction (111, 311) vers le bas et de même aussi le recouvrement (138, 338) et le support de composants (140).

5. Table de cuisson à induction selon la revendication 3 ou 4, **caractérisée en ce que** directement en dessous de l'au moins une bobine de chauffage à induction (117, 317) un support de composants (140) est disposé, ledit support recouvrant toutes les bobines de chauffage à induction de la table de cuisson à induction (111, 311).

6. Table de cuisson à induction selon l'une quelconque des revendications 3 à 5, **caractérisée en ce qu'**un support de composants (140) est équipé seulement sur un côté détourné de la plaque de table de cuisson (113, 313).

7. Table de cuisson à induction selon l'une quelconque des revendications 3 à 6, **caractérisée en ce que** bornes de raccordement (44) pour la bobine de chauffage à induction (117, 317) sont prévues sur le support de composants (40, 140) et accessibles de la face inférieure (115, 315) de la table de cuisson (111, 311), de préférence avec des ouvertures de passage sur le support de composants pour câbles de raccordement (20) de la bobine de chauffage à induction de telle manière que les câbles de raccordement (20) peuvent être raccordés aux bornes de raccordement (44) de la face inférieure (115, 315) de la table de cuisson à induction (111, 311).

8. Table de cuisson à induction selon l'une quelconque des revendications précédentes, **caractérisée en ce que** la bobine de chauffage à induction (117, 317) sur sa face supérieure vers la face inférieure de la plaque de table de cuisson (113, 313) présente matériau électriquement isolant (323) et/ou matériau thermiquement isolant (23), de préférence sous forme de couche planaire, ledit matériau recouvrant en particulier la superficie essentielle de la bobine de chauffage à induction vers la plaque de table de cuisson.

9. Table de cuisson à induction selon l'une quelconque des revendications précédentes, **caractérisée en ce qu'**une bobine de chauffage à induction (117, 317) présente au moins un plan d'enroulement où les spires (19) de la bobine de chauffage à induction en fil de bobine s'étendent, dans laquelle au-dessus d'un plan d'enroulement le plus supérieur vers la plaque de table de cuisson (113, 313) l'écarteur (323) et/ou une couche thermiquement isolante (23) sont prévus et/ou en dessous d'un plan d'enroulement le plus inférieur loin de la plaque de table de cuisson ferrites (26, 326) sont disposées.

10. Table de cuisson à induction selon la revendication 9, **caractérisée en ce que** l'un ou chaque plan d'enroulement est doté d'un recouvrement de cloison supérieur vers la plaque de table de cuisson (113, 313) et doté d'un recouvrement de cloison inférieur (322) loin de la plaque de table de cuisson, dans laquelle de préférence un recouvrement de cloison est formé par un film isolant, en particulier sous forme de film auto-adhésif à coller sur les spires.

11. Table de cuisson à induction selon l'une quelconque des revendications précédentes, **caractérisée par** un capteur de température (35, 335) collé directement sur la face inférieure (115, 315) de la plaque de table de cuisson (113, 313), dans laquelle de préférence le capteur de température est associé à une bobine de chauffage à induction (117, 317) et dans laquelle en particulier le capteur de température est arrangé dans une zone centrale libre de la bobine de chauffage à induction où la bobine ne présente aucune spire (19) en fil de bobine.

12. Procédé de montage d'une table de cuisson à induction (111, 311) selon l'une quelconque des revendications précédentes, **caractérisé par** les étapes :
- fournir une plaque de table de cuisson (113, 313) avec une face supérieure (114, 314) et avec une face inférieure (115, 315) et placer la face inférieure de la plaque vers le haut,
- attacher au moins une bobine de chauffage à induction (117, 317) avec l'écarteur (323) contre la face inférieure (115, 315) de la plaque de table de cuisson (113, 313) et, ce faisant, coller à cette face inférieure.

13. Procédé selon la revendication 12, **caractérisé par** les autres étapes :
- dans une étape précédente ou dans une étape ultérieure, coller moyens de fixation (145) sur cette face inférieure, le long d'au moins deux zones extérieures opposées de la face inférieure (115, 315) de la plaque de table de cuisson (113, 313),
- fixer un recouvrement (138), engageant l'au moins une bobine de chauffage à induction (117, 317) par en bas et/ou la recouvrant vers le bas, aux moyens de fixation (145).
